# EUROPEAN PATENT SPECIFICATION

(11) **EP 3 058 830 B1**
(45) Date of publication and mention of the grant of the patent: **13.09.2017**
(21) Application number: 16163928.1
(22) Date of filing: 01.11.2012
(51) Int. Cl.: A23F 5/24, A23F 5/36, A23F 5/28, A23F 5/30, A23F 5/34

(54) **PROCESSES FOR FORMING SOLUBLE COFFEE PRODUCTS**
VERFAHREN ZUR HERSTELLUNG VON LÖSLICHEN KAFFEEPRODUKTEN
PROCÉDÉS DE FORMATION DE PRODUITS DE CAFÉ SOLUBLE

(30) Priority: 04.11.2011 GB 201119090
(43) Date of publication of application: 24.08.2016
(62) Divisional of application: 12798827.7
(73) Proprietor: Koninklijke Douwe Egberts B.V., 3532 AD Utrecht (NL)
(72) Inventor: KANG, WON CHEAL, OXFORD, Oxfordshire OX3 8SF (GB); FOX, SIMON, STRATFORD UPON AVON, Warwickshire CV37 7HW (GB)
(74) Representative: Boult Wade Tennant

(56) References cited:
- EP-B1- 1 631 151
- WO-A1-2012/009668
- DE-U1-202010 017 387
- FR-A1- 2 406 956
- GB-A- 1 276 437
- GB-A- 2 006 603
- GB-A- 2 022 394
- US-A- 4 594 256
- US-A1- 2010 009 039

## Description

The present disclosure relates to processes for forming soluble coffee products and products so formed.

### Background

Instant soluble coffee products, such as freeze-dried and spray-dried instant coffee, are well known. Such instant soluble coffee products are formed by deriving a liquid concentrate coffee extract (commonly known as coffee liquor) from coffee beans by the well known processes of roasting and extraction. The coffee concentrate is then subjected to various foaming and drying steps to produce a dry granular end product that can be reconstituted into a coffee beverage by the addition of hot water.

It is known to incorporate in a soluble coffee product a percentage of roasted ground coffee in order to attempt to produce a more appealing instant soluble coffee product. For example, WO2010/005604 describes various soluble coffee products blended from soluble and ground coffee components. RU2400098 describes a method for production of a coffee composition based on instant freeze-dried coffee wherein roasted ground coffee is incorporated into a liquid coffee concentrate intermediate before foaming and preceding freeze-drying.

Processes of manufacturing soluble coffee are known from a plurality of documents like WO 2012/9668, GB 2022394, DE 20 2010 017387, US 2010/009039 and GB 1276437. The present applicant has discovered that when the level of roasted ground coffee increases above about 10% by dry weight of the soluble coffee product a beverage prepared from the soluble coffee product can have a layer of dark foam on the top that can lead to a unpleasant consumer experience, leaving a "dirty scum" inside of the cup.

### Brief Summary of the Disclosure

In this specification unless otherwise required by the context, the term "roasted coffee" means a coffee substance that has been produced by the roasting of green coffee beans. The substance may be in the form of a roasted coffee bean or in some other form produced by onward processing steps such as grinding, decaffeination, pressing, etc. Particular examples of roasted coffee include roasted coffee beans, roasted expeller cake, roasted and flaked coffee.

In this specification unless otherwise required by the context, the term "roasted ground coffee" means a roasted coffee substance that has been subject to a comminution process in order to reduce the particle size of the original roasted coffee substance. Again, unless otherwise required by the context the comminution process may include one or more of grinding, chopping, pounding and crushing.

In this specification, the term "dry Helos particle size distribution D90", means the 90th percentile figure by volume of the particle size distribution, as obtained from a Helos™ laser light diffraction particle size analyzer available from Sympatec, Clausthal-Zellerfeld, Germany. That is, the D90 is a value on the distribution such that 90% by volume of the particles have a characteristic size of this value or less. The figure may be obtained for a dry sample (referred to as "dry Helos").

Helos is a laser diffraction sensor system for which one evaluation method is applied over the whole measuring range from 0.1 µm to 8750 µm. This instrument is designed for particle size analysis of dry and wet samples, i.e. of powders, suspensions, emulsions or sprays.

| ***Method name*** | ***Measuring range*** | ***Application*** | ***Settings used for micro milled coffee*** |
|---|---|---|---|
| Dry PSD | 0.1 - 3500 µm (1.8 - 250 µm with R4) | Direct measurement for milled product | Lens: R4 |
| | | | Copt 1.5%ref, 20s |
| | | | Dispersion 100% 4mm 3 bar |

Dry Particle Size Distribution is measured using HELOS/KF, R4 Lens, RODOS/M Dispersing System and VIBRI Feeder manufactured by Sympatec GmbH.

The present disclosure provides a process of forming a freeze-dried soluble coffee as in the appended claims. Advantageously, it has been found that incorporating the roasted ground coffee after the foaming of the concentrated coffee extract helps to reduce and may even eliminate formation of a layer of dark foam that forms the "dirty scum" on preparation of a beverage. While not wanting to be bound by theory, it is thought that the layer of dark foam and "dirty scum" is formed in known processes due to the partial extraction of soluble solids from the roasted ground coffee during the mixing stage and storage prior to the foaming and pre-freezing stages. With the processes of the present disclosure the time between addition of the roasted ground coffee and "fixing" the product by freeze-drying or spray-drying is reduced or minimised and this is believed to reduce or prevent the unwanted extraction of soluble solids from the roasted ground coffee.

Where pre-freezing is used this may be carried out at the same time as foaming or in a separate process step. The pre-freezing (otherwise referred to as cooling) may reduce the pre-frozen coffee intermediate to a temperature of approximately -6°C to -10°C so as to form ice crystals in the intermediate.

Preferably the freeze-dried soluble coffee product comprises 10 to 30% by dry weight roasted ground coffee and 70 to 90% by dry weight soluble coffee. More preferably 15% by dry weight roasted ground coffee and 85% by dry weight soluble coffee.

Subsequent to step iii) the foamed and preferably pre-frozen coffee intermediate having roasted ground coffee incorporated therein may be subjected to a further foaming and/or pre-freezing step(s). The further foaming and/or pre-freezing steps may be carried out as the same time or in separate process steps. Further pre-freezing can be beneficial to reduce any temperature rise in the intermediate caused by the addition and mixing of the roasted ground coffee.

The roasted ground coffee of the present disclosure may have a dry Helos particle size distribution D90 of less than or equal to 40 microns, preferably less than or equal to 30 microns. The roasted ground coffee may be produced by cryogenic milling, rotary milling, jet milling or equivalent.

The roasted ground coffee of step iii) may be provided as a component of a blended mixture of roasted ground coffee and soluble coffee wherein the blended mixture is incorporated into the foamed and preferably pre-frozen coffee intermediate. In which case the soluble coffee may be spray-dried coffee, freeze-dried coffee, or a mixture thereof.

Preferably the blended mixture comprises 10 to 80% by dry weight roasted ground coffee and 20 to 90% by dry weight soluble coffee; preferably, 10 to 70% by dry weight roasted ground coffee and 30 to 90% by dry weight soluble coffee; more preferably 15 to 50% by dry weight roasted ground coffee and 50 to 85% by dry weight soluble coffee. In one example the blended mixture comprises 50% by dry weight soluble coffee and 50% by dry weight roasted ground coffee.

Preferably the blended mixture has a dry Helos particle size distribution D90 of less than or equal to 40 microns, more preferably less than or equal to 30 microns.

The blended mixture may be a mixture formed by the steps of:
a) introducing particles of a roasted coffee precursor into a milling chamber;
b) introducing particles of soluble coffee into the milling chamber;
c) jetting a gas into the milling chamber to mobilise the particles of the roasted coffee precursor and soluble coffee;
d) thereby producing a blended mixture by comminuting the particles of the roasted coffee precursor by self-collision of the particles of the roasted coffee precursor and by collision of the particles of soluble coffee with the particles of the roasted coffee precursor within the milling chamber. A suitable jet mill to produce the blended mixture is the Jet-O-Mizer™ mill available from Fluid Energy Processing and Equipment Company, Telford, PA, USA. Another suitable mill is the Hosokawa Alpine Fluid Bed Opposed Jet Mill - AFG, available from Hosakawa Micron Ltd, Runcorn, Cheshire, United Kingdom.

The particles of the roasted coffee precursor in step a) may be at a temperature of between 5 and 30 degrees Celsius.

Preferably the milling chamber is not subject to cryogenic cooling during steps b), c) and d).

The gas jetted into the milling chamber in step b) may be nitrogen, air, or a mixture thereof.

Preferably the gas is at a temperature between -20 degrees Celsius and ambient temperature.

The processes described above may optionally include a storage step before step iv) to allow for crystallisation of ice crystals and growth of already present ice crystals in the foamed and pre-frozen coffee intermediate.

The processes described above may optionally include recirculation of ice fines from the grinding step via a slurry mixer or equivalent.

The present disclosure also extends to a process of forming a spray-dried soluble coffee product, comprising the steps of:
i) forming a concentrated coffee extract;
ii) subsequently incorporating roasted ground coffee into the concentrated coffee extract;
iii) optionally filtering and homogenizing the concentrated coffee extract to form a filtered and homogenized coffee extract;
iv) spray drying the concentrated coffee extract or the filtered and homogenized coffee extract to form the spray-dried soluble coffee product.

Optionally, in this process, prior to step ii), the additional step of foaming the concentrated coffee extract may be undertaken.

The processes described above may further include the addition of one or more additional components to the soluble coffee product.

The present disclosure extends to a soluble coffee product produced by the processes described above and also to a container containing said soluble coffee product. The container may be a bottle, a jar, a tin, a refill pack, a sachet, a stick pack, a filter bag or a container suitable for use in a beverage preparation machine such as a flexible pad formed at least partly from filtering material, or a rigid, semi-rigid or flexible cartridge formed from substantially air- and water-impermeable materials.

The container may further contain one or more additional beverage components such as natural or artificial sweeteners, dairy or non-dairy based creamers, lactose, vegetable fat, whey proteins, emulsifiers, stabilisers, modified starches, carriers, fillers, flavours, colours, nutrients, preservatives, flow agents or foaming agents.

The present disclosure extends to a beverage preparation machine in combination with at least one container suitable for use in said beverage preparation machine such as a flexible pad formed at least partly from filtering material, or a rigid, semi-rigid or flexible cartridge formed from substantially air- and water-impermeable materials, said at least one container containing one or more of the soluble coffee products described above.

The present disclosure extends to method of making a beverage comprising the step of mixing one or more of the soluble coffee products described above with an aqueous liquid, preferably hot water. The mixing may be performed by a beverage preparation machine. Alternatively, the mixing may be by hand in a receptacle.

Further aspects of the disclosure are set out in the following numbered clauses:
1. A process of forming a freeze-dried soluble coffee product, comprising the steps of:
   i) forming a concentrated coffee extract;
   ii) foaming and optionally pre-freezing the concentrated coffee extract to form a foamed and preferably pre-frozen coffee intermediate;
   iii) subsequently incorporating roasted ground coffee into the foamed and preferably pre-frozen coffee intermediate;
   iv) subsequently freezing the foamed and preferably pre-frozen coffee intermediate to form a frozen coffee intermediate;
   v) grinding and sieving the frozen coffee intermediate to form a ground coffee intermediate;
   vi) drying the ground coffee intermediate to form the freeze-dried soluble coffee product;
   wherein subsequent to step iii), the foamed and pre-frozen intermediate having roasted ground coffee incorporated therein is subjected to a further pre-freezing step.
2. The process of clause 1 wherein the freeze-dried soluble coffee product comprises 10 to 30% by dry weight roasted ground coffee and 70 to 90% by dry weight soluble coffee, preferably 15% by dry weight roasted ground coffee and 85% by dry weight soluble coffee.
3. The process of clause 1 or clause 2 wherein subsequent to step iii) the foamed and preferably pre-frozen coffee intermediate having roasted ground coffee incorporated therein is subjected to a further foaming and/or pre-freezing step(s).
4. The process of any preceding clause wherein the roasted ground coffee has a dry Helos particle size distribution D90 of less than or equal to 40 microns, preferably less than or equal to 30 microns.
5. The process of any preceding clause wherein the roasted ground coffee of step iii) is provided as a component of a blended mixture of roasted ground coffee and soluble coffee wherein the blended mixture is incorporated into the foamed and preferably pre-frozen coffee intermediate.
6. The process of clause 5 wherein the blended mixture comprises 10 to 80% by dry weight roasted ground coffee and 20 to 90% by dry weight soluble coffee.
7. The process of clause 5 or clause 6 wherein the blended mixture has a dry Helos particle size distribution D90 of less than or equal to 40 microns, preferably less than or equal to 30 microns.
8. The process of any of clauses 5 to 7 wherein the blended mixture is a mixture formed by the steps of:
   a) introducing particles of a roasted coffee precursor into a milling chamber;
   b) introducing particles of soluble coffee into the milling chamber;
   c) jetting a gas into the milling chamber to mobilise the particles of the roasted coffee precursor and soluble coffee;
   d) thereby producing a blended mixture by comminuting the particles of the roasted coffee precursor by self-collision of the particles of the roasted coffee precursor and by collision of the particles of soluble coffee with the particles of the roasted coffee precursor within the milling chamber.

### Brief Description of the Drawings

Aspects of the present disclosure will now be described, by way of example only, with reference to the accompanying drawings, in which:
Figure 1 is a flow diagram illustrating a process for forming a freeze-dried soluble coffee product as described in the applicant's co-pending PCT application, PCT/US2011/044127;
Figure 2 is a flow diagram illustrating a modified process for forming a freeze-dried soluble coffee product;
Figure 3 is a flow diagram illustrating a process for forming a freeze-dried soluble coffee product according to a first aspect of the present disclosure;
Figure 4 is a flow diagram illustrating a process for forming a freeze-dried soluble coffee product according to a second aspect of the present disclosure; and
Figure 5 is a flow diagram illustrating a process for forming a freeze-dried soluble coffee product according to a third aspect of the present disclosure.

### Detailed Description

In the following processes the addition of "roasted ground coffee 40" is described. In each case the roasted ground coffee 40 may be pure roasted ground coffee or may be a component of a blended mixture of roasted ground coffee and soluble coffee wherein the blended mixture is itself added to the process.

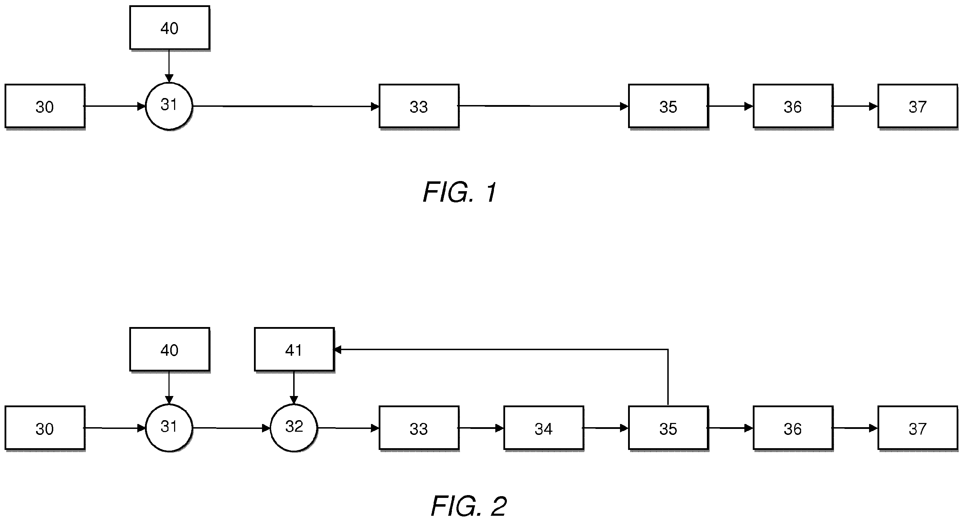

A process for forming a freeze-dried soluble coffee product as described in the applicant's co-pending PCT application, PCT/US2011/044127 is shown in Figure 1. A concentrate coffee extract 30 (aromatised or non-aromatised) is mixed with a roasted ground coffee 40 using a high shear mixer 31 prior to a foaming and pre-freezing step 33. After foaming and pre-freezing, the intermediate is frozen on a belt freezer, ground and sieved at step 35 to produce a particle size range of 0.3 to 3.5mm, alternatively 0.3 to 2.5 mm, alternatively 0.3 to 1.5 mm. The intermediate is then vacuum dried at step 36 to produce the freeze-dried soluble coffee product 37.

Figure 2 shows a modified process compared to Figure 1 wherein an additional, optional, crystallisation step 34 is included immediately after foaming and pre-freezing 33 to allow ice crystal formation and growth within the intermediate prior to freeze-drying. In addition, an optional recirculation of ice fines 41 from the grinding and sieving of step 35 is present. The ice fines 41 are mixed into the concentrated coffee extract using a slurry mixer 32.

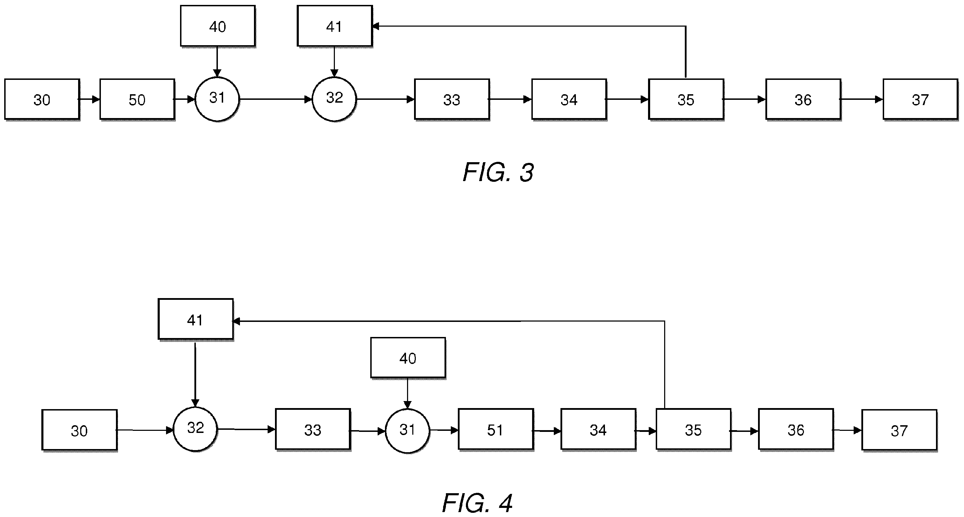

Figure 3 shows a process according to a first aspect of the present disclosure wherein a concentrated coffee extract 30 (aromatised or non-aromatised) is foamed at stage 50 and then roasted ground coffee 40 is incorporated using a high shear mixer 31. Typically the temperature of the foamed intermediate into which the roasted ground coffee 40 is incorporated will be from 5°C to 20°C. Next, optionally, ice fines 41 are added using a slurry mixer 32. The intermediate then undergoes a secondary foaming step 33 which optionally includes pre-freezing of the intermediate. The intermediate is then passed to a crystalliser 34 and stored there for between 30 and 90 minutes to allow for ice crystal growth. Next the intermediate is frozen on a belt freezer, ground and sieved at step 35 to produce a particle size range of 0.3 to 3.5mm, alternatively 0.3 to 2.5 mm, alternatively 0.3 to 1.5 mm. Fines 41 are optionally recirculated. The intermediate is then vacuum dried at step 36 to produce the freeze-dried soluble coffee product 37.

Figure 4 shows a process according to a second aspect of the present disclosure wherein a concentrated coffee extract 30 (aromatised or non-aromatised) optionally has added thereto ice fines 41 using a slurry mixer 32. Next, the extract is foamed and preferably pre-frozen at stage 33. Roasted ground coffee 40 is then subsequently incorporated using a high shear mixer 31. Typically the temperature of the foamed and pre-frozen (if applicable) intermediate into which the roasted ground coffee 40 is incorporated will be from -5°C to 5°C. The intermediate then undergoes a secondary pre-freezing (cooling) step 51. The intermediate is then passed to a crystalliser 34 and stored there for between 30 and 90 minutes to allow for ice crystal growth. Next the intermediate is frozen on a belt freezer, ground and sieved at step 35 to produce a particle size range of 0.3 to 3.5mm, alternatively 0.3 to 2.5 mm, alternatively 0.3 to 1.5 mm. Fines 41 are optionally recirculated. The intermediate is then vacuum dried at step 36 to produce the freeze-dried soluble coffee product 37.

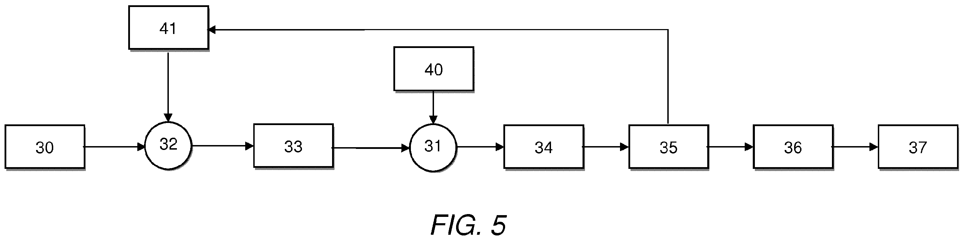

Figure 5 shows a process according to a third aspect of the present disclosure wherein a concentrated coffee extract 30 (aromatised or non-aromatised) optionally has added thereto ice fines 41 using a slurry mixer 32. Next, the extract is foamed and preferably pre-frozen at stage 33. Roasted ground coffee 40 is then subsequently incorporated using a high shear mixer 31. Typically the temperature of the foamed and pre-frozen (if applicable) intermediate into which the roasted ground coffee 40 is incorporated will be from -15°C to -5°C. The intermediate is then passed to a crystalliser 34 and stored there for between 30 and 90 minutes to allow for ice crystal growth. Next the intermediate is frozen on a belt freezer, ground and sieved at step 35 to produce a particle size range of 0.3 to 3.5mm, alternatively 0.3 to 2.5 mm, alternatively 0.3 to 1.5 mm. Fines 41 are optionally recirculated. The intermediate is then vacuum dried at step 36 to produce the freeze-dried soluble coffee product 37.

The above processes may also be adapted for producing a spray-dried soluble coffee product wherein roasted ground coffee is incorporated into a concentrated coffee extract and before the spray-drying stage. Optionally, the concentrated coffee extract may be subjected to a foaming step prior to the spray-drying. In this case, the roasted ground coffee is incorporated into the mixture after the foaming step.

The soluble products described above may be packaged for sale in a container such as a jar or a container suitable for use in a beverage preparation machine, such as a pad or cartridge, etc.

## Claims

1. A process of forming a freeze-dried soluble coffee product, comprising the steps of:
i) forming a concentrated coffee extract;
ii) foaming and pre-freezing the concentrated coffee extract to form a foamed and pre-frozen coffee intermediate;
iii) subsequently incorporating roasted ground coffee into the foamed and pre-frozen coffee intermediate;
iv) subsequently freezing the foamed and pre-frozen coffee intermediate to form a frozen coffee intermediate;
v) grinding and sieving the frozen coffee intermediate to form a ground coffee intermediate;
vi) drying the ground coffee intermediate to form the freeze-dried soluble coffee product;
wherein subsequent to step iii), the foamed and pre-frozen intermediate having roasted ground coffee incorporated therein is subjected to a further pre-freezing step.

2. The process of claim 1 wherein pre-freezing is carried out at the same time as foaming.

3. The process of claim 1 wherein pre-freezing reduces the pre-frozen coffee intermediate to a temperature of approximately -6ºC to -10ºC so as to form ice crystals in the intermediate.

4. The process of claim 1 wherein the process includes a storage step before step iv) to allow for crystallisation of ice crystals and growth of already present ice crystals in the foamed and pre-frozen coffee intermediate.

5. The process of claim 1 or claim 4 wherein the freeze-dried soluble coffee product comprises 10 to 30% by dry weight roasted ground coffee and 70 to 90% by dry weight soluble coffee, preferably 15% by dry weight roasted ground coffee and 85% by dry weight soluble coffee.

6. The process of claim 1 or claim 5 wherein subsequent to step iii) the foamed and pre-frozen coffee intermediate having roasted ground coffee incorporated therein is subjected to a further foaming step.

7. The process of any preceding claim wherein the roasted ground coffee has a dry Helos particle size distribution D90 of less than or equal to 40 microns, preferably less than or equal to 30 microns.

8. The process of any one of claim 1 or claims 5 to 7 wherein the roasted ground coffee of step iii) is provided as a component of a blended mixture of roasted ground coffee and soluble coffee wherein the blended mixture is incorporated into the foamed and pre-frozen coffee intermediate.

9. The process of claim 8 wherein the blended mixture comprises 10 to 80% by dry weight roasted ground coffee and 20 to 90% by dry weight soluble coffee.

10. The process of claim 8 or claim 9 wherein the blended mixture has a dry Helos particle size distribution D90 of less than or equal to 40 microns, preferably less than or equal to 30 microns.

11. The process of any of claims 8 to 10 wherein the blended mixture is a mixture formed by the steps of:
a) introducing particles of a roasted coffee precursor into a milling chamber;
b) introducing particles of soluble coffee into the milling chamber;
c) jetting a gas into the milling chamber to mobilise the particles of the roasted coffee precursor and soluble coffee;
d) thereby producing a blended mixture by comminuting the particles of the roasted coffee precursor by self-collision of the particles of the roasted coffee precursor and by collision of the particles of soluble coffee with the particles of the roasted coffee precursor within the milling chamber.

## Patentansprüche

1. Verfahren zum Bilden eines gefriergetrockneten, löslichen Kaffeeprodukts, umfassend die Schritte:
i) Bilden eines konzentrierten Kaffeeextrakts;
ii) Schäumen und Vorfrieren des konzentrierten Kaffeeextrakts, um ein geschäumtes und vorgefrorenes Kaffeezwischenprodukt zu bilden;
iii) anschließend Einbringen von geröstetem, gemahlenem Kaffee in das geschäumte und vorgefrorene Kaffeezwischenprodukt;
iv) anschließend Frieren des geschäumten und vorgefrorenen Kaffeezwischenprodukts, um ein gefrorenes Kaffeezwischenprodukt zu bilden;
v) Mahlen und Sieben des gefrorenen Kaffeezwischenprodukts, um ein gemahlenes Kaffeezwischenprodukt zu bilden;
vi) Trocknen des gemahlenen Kaffeezwischenprodukts, um das gefriergetrocknete, lösliche Kaffeeprodukt zu bilden;
wobei im Anschluss an Schritt iii), das geschäumte und vorgefrorene Zwischenprodukt mit darin eingebrachtem geröstetem, gemahlenem Kaffee einem weiteren Vorfrierschritt unterzogen wird.

2. Verfahren nach Anspruch 1, wobei Vorfrieren zur gleichen Zeit wie Schäumen durchgeführt wird.

3. Verfahren nach Anspruch 1, wobei Vorfrieren das vorgefrorene Kaffeezwischenprodukt auf eine Temperatur von ungefähr -6 °C bis -10 °C senkt, um so Eiskristalle im Zwischenprodukt zu bilden.

4. Verfahren nach Anspruch 1, wobei das Verfahren einen Aufbewahrungsschritt vor Schritt iv) umfasst, um Kristallisation von Eiskristallen und Wachstum bereits vorhandener Eiskristalle im geschäumten und vorgefrorenen Kaffeezwischenprodukt zu ermöglichen.

5. Verfahren nach Anspruch 1 oder Anspruch 4, wobei das gefriergetrocknete, lösliche Kaffeeprodukt 10 bis 30% Trockengewicht gerösteten, gemahlenen Kaffee und 70 bis 90% Trockengewicht löslichen Kaffee, bevorzugt 15% Trockengewicht gerösteten, gemahlenen Kaffee und 85% Trockengewicht löslichen Kaffee umfasst.

6. Verfahren nach Anspruch 1 oder Anspruch 5, wobei im Anschluss an Schritt iii) das geschäumte und vorgefrorene Kaffeezwischenprodukt mit darin eingebrachtem geröstetem, gemahlenem Kaffee einem weiteren Schäumungsschritt unterzogen wird.

7. Verfahren nach einem der vorhergehenden Ansprüche, wobei der geröstete, gemahlene Kaffee eine Trocken-Helos-Partikelgrößenverteilung D90 von weniger als oder gleich 40 Mikrometer, bevorzugt weniger als oder gleich 30 Mikrometer aufweist.

8. Verfahren nach einem der Ansprüche 1 oder 5 bis 7, wobei der geröstete, gemahlene Kaffee aus Schritt iii) als ein Bestandteil einer vermengten Mischung aus geröstetem, gemahlenem Kaffee und löslichem Kaffee bereitgestellt wird, wobei die vermengte Mischung in das geschäumte und vorgefrorene Kaffeezwischenprodukt eingebracht wird.

9. Verfahren nach Anspruch 8, wobei die vermengte Mischung 10 bis 80% Trockengewicht gerösteten, gemahlenen Kaffee und 20 bis 90% Trockengewicht löslichen Kaffee umfasst.

10. Verfahren nach Anspruch 8 oder Anspruch 9, wobei die vermengte Mischung eine Trocken-Helos-Partikelgrößenverteilung D90 von weniger als oder gleich 40 Mikrometer, bevorzugt weniger als oder gleich 30 Mikrometer aufweist.

11. Verfahren nach einem der Ansprüche 8 bis 10, wobei die vermengte Mischung eine Mischung ist, gebildet durch die Schritte:
a) Einbringen von Partikeln einer gerösteten Kaffeevorstufe in eine Mahlkammer;
b) Einbringen von Partikeln löslichen Kaffees in die Mahlkammer;
c) Einströmen eines Gases in die Mahlkammer, um die Partikel der gerösteten Kaffeevorstufe und des löslichen Kaffees zu mobilisieren;
d) wodurch durch Zerkleinern der Partikel der gerösteten Kaffeevorstufe durch Selbstkollision der Partikel der gerösteten Kaffeevorstufe und durch Kollision der Partikel des löslichen Kaffees mit den Partikeln der gerösteten Kaffeevorstufe innerhalb der Mahlkammer eine vermengte Mischung hergestellt wird.

## Revendications

1. Procédé de formation d'un produit à base de café soluble lyophilisé, comprenant les étapes qui consistent :
i) à former un extrait de café concentré ;
ii) à faire mousser et à pré-congeler l'extrait de café concentré pour former un produit intermédiaire de café mousseux et pré-congelé ;
iii) à incorporer par la suite le café torréfié moulu dans le produit intermédiaire de café mousseux et pré-congelé ;
iv) à congeler par la suite le produit intermédiaire de café mousseux et pré-congelé pour former un produit intermédiaire de café congelé ;
v) à moudre et à cribler le produit intermédiaire de café congelé pour former un produit intermédiaire de café moulu ;
vi) à sécher le produit intermédiaire de café moulu pour former le produit à base de café soluble lyophilisé ;
dans lequel, après l'étape iii), le produit intermédiaire mousseux et pré-congelé ayant du café torréfié moulu incorporé dedans est soumis à une étape de pré-congélation supplémentaire.

2. Procédé de la revendication 1, dans lequel la pré-congélation est réalisée en même temps que le moussage.

3. Procédé de la revendication 1, dans lequel la pré-congélation réduit le produit intermédiaire de café pré-congelé à une température allant d'environ -6°C à -10°C de manière à former des cristaux de glace dans le produit intermédiaire.

4. Procédé de la revendication 1, dans lequel le procédé comporte une étape de stockage avant l'étape iv) pour permettre la cristallisation de cristaux de glace et la croissance des cristaux de glace déjà présents dans le produit intermédiaire de café mousseux et pré-congelé.

5. Procédé de la revendication 1 ou 4, dans lequel le produit à base de café soluble lyophilisé comprend 10 à 30% en poids sec de café torréfié moulu et 70 à 90% en poids sec de café soluble, de préférence 15% en poids sec de café torréfié moulu et 85% en poids sec de café soluble.

6. Procédé de la revendication 1 ou 5, dans lequel, après l'étape iii), le produit intermédiaire de café mousseux et pré-congelé ayant du café torréfié moulu incorporé dedans est soumis à une étape de moussage supplémentaire.

7. Procédé de l'une des revendications précédentes, dans lequel le café torréfié moulu a une répartition de taille de particule sèche D90 par laser Helos inférieure ou égale à 40 microns, de préférence inférieure ou égale à 30 microns.

8. Procédé de l'une quelconque des revendications 1 et 5 à 7, dans lequel le café torréfié moulu de l'étape iii) est prévu en tant que composant d'un mélange homogénéisé de café torréfié moulu et de café soluble, où le mélange homogénéisé est incorporé dans le produit intermédiaire de café mousseux et pré-congelé.

9. Procédé de la revendication 8, dans lequel le mélange homogénéisé comprend 10 à 80% en poids sec de café torréfié moulu et 20 à 90 % en poids sec de café soluble.

10. Procédé de la revendication 8 ou 9, dans lequel le mélange homogénéisé a une répartition de taille de particule sèche D90 par laser Helos inférieure ou égale à 40 microns, de préférence inférieure ou égale à 30 microns.

11. Procédé de l'une des revendications 8 à 10, dans lequel le mélange homogénéisé est un mélange formé par les étapes qui consistent :
a) à introduire des particules d'un précurseur de café torréfié dans une chambre de broyage ;
b) à introduire des particules de café soluble dans la chambre de broyage ;
c) à éjecter un gaz dans la chambre de broyage pour mobiliser les particules du précurseur de café torréfié et du café soluble ;
d) à produire ainsi un mélange homogénéisé en fragmentant les particules du précurseur de café torréfié par auto-collision des particules du précurseur de café torréfié et par collision des particules de café soluble avec les particules du précurseur de café torréfié à l'intérieur de la chambre de broyage.
